# EUROPEAN PATENT SPECIFICATION

(11) **EP 1 326 492 B1**
(45) Date of publication and mention of the grant of the patent: **12.05.2004**
(21) Application number: 01979871.9
(22) Date of filing: 18.10.2001
(51) Int. Cl.: A01N 1/02

(54) **METHOD OF CRYOPRESERVATION OF TISSUES OR ORGANS OTHER THAN A BLOOD VESSEL BY VITRIFICATION**
VERFAHREN ZUR KRYOKONSERVIERUNG VON GEWEBE ODER ORGANEN VERSCHIEDEN VON BLUTGEFÄSSEN MITTELS VITRIFIZIERUNG
PROCEDE DE CONSERVATION PAR LE FROID DE TISSUS OU D'ORGANES AUTRES QUE DES VAISSEAUX SANGUINS, PAR VITRIFICATION

(30) Priority: 19.10.2000 US 691197
(43) Date of publication of application: 16.07.2003
(73) Proprietor: Organ Recovery Systems, Inc., Des Plaines, IL 60018 (US)
(72) Inventor: KHIRABADI, Bijan, S., Rockville, MD 20851 (US); SONG, Ying, C., Mt. Pleasant, SC 29464 (US); BROCKBANK, Kelvin, G., M., Charleston, SC 29401 (US)
(74) Representative: Guerre, Dominique
(86) International application number: PCT/US2001/032415
(87) International publication number: WO 2002/032225

(56) References cited:
- WO-A-00/60935
- WO-A-01/78504
- WO-A-96/05727
- US-A- 4 559 298
- BOURNE W M ET AL: "HUMAN CORNEAL STUDIES WITH A VITRIFICATION SOLUTION CONTAINING DIMETHYL SULFOXIDE, FORMAMIDE, AND 1,2-PROPANEDIOL" CRYOBIOLOGY, ACADEMIC PRESS INC, US, vol. 31, no. 6, 1994, pages 522-530, XP000917091 ISSN: 0011-2240
- DATABASE BIOSIS [Online] BIOSCIENCES INFORMATION SERVICE, PHILADELPHIA, PA, US; 1997 PEGG DAVID E ET AL: "Fractures in cryopreserved elastic arteries." Database accession no. PREV199799558143 XP002203120 & CRYOBIOLOGY, vol. 34, no. 2, 1997, pages 183-192, ISSN: 0011-2240
- ARMITAGE W J: "SURVIVAL OF CORNEAL ENDOTHELIUM FOLLOWING EXPOSURE TO A VITRIFICATION SOLUTION" CRYOBIOLOGY, ACADEMIC PRESS INC, US, vol. 26, no. 4, 1989, pages 318-327, XP000917067 ISSN: 0011-2240

## Description

### BACKGROUND OF THE INVENTION

The U.S. Government has a paid-up license in this invention and the right in limited circumstances to require the patent owner to license others on reasonable terms as provided by the terms of cooperative agreement No. 70NANB7H3071 awarded by NIST.

The supply of viable tissues and cells for autologous implantation and heterologous transplantation (hereinafter jointly referred to as transplantation) and study is limited in part by the time a tissue or organ can be maintained in a viable state. Increasing the length of time that a tissue or organ remains viable may drastically increase the likelihood that a particular tissue or organ reaches a recipient or researcher in a viable state.

The transplantation of tissues, natural or engineered, including vascularized tissues and avascular tissues, including, but not limited to, musculoskeletal tissue, such as cartilage, menisci, muscles, ligaments and tendons, skin, cardiovascular tissue, such as heart valves and myocardium, neuronal tissue, periodontal tissue, glandular tissue, organ tissue, islets of Langerhans, cornea, ureter, urethra, breast tissue, and organs, intact or sections thereof, such as pancreas, bladder, kidney, liver, intestine and heart, may all be benefited by increasing the length of time that such tissues and organs remain viable.

Vascularized tissues and organs, both human and animal, may be successfully stored by vitrification for transplantation. Providing that significant immunological issues can be overcome, animal-derived grafts may, one day, provide an unlimited supply of vascularized tissues and organs that could be stored in a vitrified state prior to transplantation.

Avascular tissues may also be used for transplantation. For example, on average, an orthopedic surgeon specializing in knee surgery will treat between 10-20 patients per year who have sustained traumatic, full-thickness articular cartilage injuries. These patients may all be candidates for cartilage implantation. Approximately 30% of all Anterior Cruciate Ligament (ACL) tears have an associated full-thickness cartilage defect that often is undetected, even after surgery. For example, it was estimated that 20.4% of the 392,568 patients who received cartilage repairs in 1996 were candidates for a cartilage implant.

Over time, most full-thickness defects deteriorate and cause significant joint impairment. Since cartilage is avascular, the recruitment of cells to aid healing of partial thickness defects is difficult. In contrast, full-thickness defects have the potential for partial healing when techniques such as abrasion arthroplasty are employed. Unfortunately, however, these procedures generally result in mechanically inferior fibrous scars.

Fresh osteochondral allografts have proven to be effective and functional for transplantation. The limited availability of fresh allograft tissues, however, necessitates the use of osteoarticular allograft banking for long-term storage. Although cryopreservation involving freezing is a preferred method for storing tissue until needed, conventional protocols result in death of 80-100% of the chondrocytes and damage to the extracellular matrix due to ice formation. These detrimental effects are the main obstacles preventing successful clinical outcome. Various studies using animal articular cartilage models and human cartilage biopsies have revealed no more than 20% chondrocyte viability following conventional cryopreservation procedures employing either dimethyl sulfoxide (DMSO) or glycerol as cryoprotectants. Such results greatly limit the possibilities for transplantation or grafting harvested cartilage.

Low temperature preservation of biological tissues and organs, i.e., cryopreservation, has been the subject of much research effort. Cryopreservation can be approached by freezing or by vitrification. If the organ or tissue is frozen, ice crystals may form within the organ or tissue that may mechanically disrupt its structure and thus damage its ability to function correctly when it is transplanted into a recipient. Organized tissues and organs are particularly susceptible to mechanical damage from ice crystals formed during freezing.

Even when all cryopreservation variables are controlled, there is a limit, which is largely a function of tissue volume and geometry (including any associated fluids and packaging), beyond which traditional cryopreservation methods do not consistently work. For example, in cryopreserved allograft heart valves, the leaflet fibroblasts survive well (70-90%), but neither the endothelial cells nor the smooth muscle cells of the aortic tissue associated with the valve survive. Cryopreservation can also be effective for isolated islets of Langerhans, but preservation of islets in bioengineered capsules can be technically difficult. Skin is relatively easy to preserve because of the thin, flat structure of the tissue. It appears that thawing of skin-like products, however, can be technically difficult due to the narrow window for error during warming, outside of which ice growth resulting in tissue damage can occur. In all of these examples, the problems are due to ice formation either within the cells, the extracellular matrix, the capsule, or, as in the case of heart valve endothelium, compression in the lumen of the associated artery.

Vitrification, by contrast, means solidification, as in a glass, without ice crystal formation. The principles of vitrification are well-known. Generally, the lowest temperature a solution can possibly supercool to without freezing is the homogeneous nucleation temperature Tₕ, at which temperature ice crystals nucleate and grow, and a crystalline solid is formed from the solution. Vitrification solutions have a glass transition temperature T_{g}, at which temperature the solute vitrifies, or becomes a non-crystalline solid. Owing to the kinetics of nucleation and crystal growth, it is effectively impossible for water molecules to align for crystal formation at temperatures much below T_{g}. In addition, on cooling most dilute aqueous solutions to the glass transition temperature, Tₕ is encountered before T_{g}, and ice nucleation occurs, which makes it impossible to vitrify the solution. In order to make such solutions useful in the preservation of biological materials by vitrification, it is therefore necessary to change the properties of the solution so that vitrification occurs instead of ice crystal nucleation and growth. It is also important that all viability and tissue function be maintained by the entire vitrification process.

While it is generally known that high hydrostatic pressures raise T_{g} and lower Tₕ, vitrification of most dilute solutions by the application of pressure is often impossible or impractical. In particular, for many solutions vitrifiable by the application of pressure, the required pressures cause unacceptably severe injury to unprotected biomaterials during vitrification thereof. While it is also known that many solutes, such as commonly employed cryoprotectants like DMSO, raise T_{g} and lower Tₕ, solution concentrations of DMSO or similar solutes high enough to permit vitrification typically approach the eutectic concentration and are generally toxic to biological materials.

One type of damage caused by cryoprotectants is osmotic damage. Cryobiologists learned of the osmotic effects of cryoprotectants in the 1950's and of the necessity of controlling these effects so as to prevent damage during the addition and removal of cryoprotectants to isolated cells and tissues. Similar lessons were learned when cryobiologists moved on to studies of whole organ perfusion with cryoprotectants. Attention to the principles of osmosis were essential to induce tolerance to cryoprotectant addition to organs.

Despite efforts to control the deleterious osmotic effects of cryoprotectants, limits of tolerance to cryoprotectants are still observed. There appear to be genuine, inherent toxic effects of cryoprotectants that are independent of the transient osmotic effects of these chemical agents.

Studies by the present inventors and others have examined methods of controlling non-osmotic, inherent toxicity of cryoprotectant agents. The results indicate that several techniques can be effective alone and in combination. These include (a) the use of specific combinations of cryoprotectant whose effects cancel out each other's toxicities; (b) exposure to cryoprotectants in vehicle solutions that are optimized for those particular cryoprotectants; (c) the use of non-penetrating agents that can substitute for a portion of the penetrating agent otherwise needed, thus sparing the cellular interior from exposure to additional intracellular agents; and (d) minimizing the time spent within the concentration range of rapid time-dependent toxicity.

Some of these techniques are in potential conflict with need to control osmotic forces. For example, reduced temperatures also reduce the influx and efflux rate of cryoprotectants, thereby prolonging and intensifying their osmotic effects. Similarly, minimizing exposure time to cryoprotectants maximizes their potential osmotic effects. Thus, there must be a balance reached between the control of osmotic damage and the control of toxicity. Means for obtaining this balance are described in U.S. Patent No. 5,723,282 to Fahy et al. However, this patent does not describe a particular method to be used for cartilage or other tissues for which vitrification offers a potential technique for improved crypreservation. In addition, this patent does not discuss any protocols for cooling or warming the organ or tissue.

### SUMMARY OF THE INVENTION

The present invention is directed to a method for vitrification of tissues, including vascularized tissues and avascular tissues, or organs, other than a blood vessel. The method comprises immersing the tissue or organ in increasing concentrations of cryoprotectant solution at a temperature greater than -5°C to a cryoprotectant concentration sufficient for vitrification; rapidly cooling the tissue or organ to a temperature between -80°C and the glass transition temperature (T_{g}); and further cooling the tissue or organ from a temperature above the glass transition temperature to a temperature below the glass transition temperature to vitrify the tissue or organ.

The present invention is also directed to a method for removing a tissue or organ other than a blood vessel from vitrification in a cryoprotectant solution. The method comprises slowly warming a vitrified tissue or organ in the cryoprotectant solution to a temperature between -80°C and the glass transition temperature; rapidly warming the tissue or organ in the cryoprotectant solution to a temperature above -75°C; and reducing the concentration of the cryoprotectant by immersing the tissue or organ in decreasing concentrations of cryoprotectant.

The present invention is also directed to a method for treating tissues or organs other than a blood vessel such that viability is retained at a high level. For example, the invention provides that cell and tissue functions are maintained. In particular, the present invention is directed to a method in which at least 50%, preferably at least 70%, and more preferably greater than 80% of cell and tissue functions are maintained relative to fresh untreated controls.

### BRIEF DESCRIPTION OF THE DRAWINGS

Fig. 1 shows an example of a perfusion system that can be used in the present invention.
Fig. 2 shows a device that can be used for rapidly cooling tissues or organs.
Fig. 3 shows an exemplary cooling profile generated by placing the glass scintillation vial 30 mm deep in precooled 2-methylbutane and then in cold air using the device of Fig. 2.
Fig. 4 shows an exemplary warming profile generated by placing the glass scintillation vial in cold air and then in a mixture of 30% DMSO/H₂O at room temperature.

### DETAILED DESCRIPTION OF PREFERRED EMBODIMENTS

The present invention is directed to a method for vitrification of a tissue or organ in a cryoprotectant solution and for subsequently removing the tissue or organ from vitrification. "Tissue or organ" is used herein to refer to any natural or engineered biological tissue or organ, including, but not limited to, vascularized tissues and avascular tissues, including musculoskeletal tissue, such as cartilage, menisci, muscles, ligaments and tendons, skin, cardiovascular tissue, such as heart valves and myocardium, neuronal tissue, periodontal tissue, glandular tissue, organ tissue, islets of Langerhans, cornea, ureter, urethra, breast tissue, and organs, such as pancreas, bladder, kidney, breast, liver, intestine, heart and sections or pieces thereof.

As used herein, the term "transplantation" refers to any type of transplantation or implantation whether or not autologous, homologous or heterologous, and whether or not it is performed directly or subsequent to further processing of the tissue or organ.

As used herein, the term "vitrification" refers to solidification without ice crystal formation. As used herein, a tissue is vitrified when it reaches the glass transition temperature (Tg). The process of vitrification involves a marked increase in viscosity of the cryoprotectant solution as the temperature is lowered such that ice nucleation and growth are inhibited. In practice, vitrification or vitreous cryopreservation may be achieved even in the presence of a small, or restricted amount of ice, which is less than an amount that causes injury to the tissue.

As used herein, the "glass transition temperature" refers to the glass transition temperature of a solution under the conditions at which the process is being conducted. In general, the process of the present invention is conducted at physiological pressures. However, higher pressures can be used as long as the tissue or organ is not significantly damaged thereby.

As used herein, "physiological pressures" refer to pressures that tissues or organs undergo during normal function. The term "physiological pressures" thus includes normal atmospheric conditions, as well as the higher pressures that various tissues, such as vascularized tissues, undergo under diastolic and systolic conditions.

As used herein, the term "perfusion" means the flowing of a fluid through the tissue or organ. Techniques for perfusing organs and tissues are discussed in, for example, U.S. Patent No. 5,723,282 to Fahy et al.

As used herein, the term "cryoprotectant" means a chemical that minimizes ice crystal formation in a tissue or organ when the tissue or organ is cooled to subzero temperatures and results in an increase in viability after warming, in comparison to the effect of cooling without cryoprotectant.

As used herein, "approximate osmotic equilibration" means that there is no more than a 10% difference between the intracellular and extracellular solute concentrations. A difference of no more than 10% means, for example, that, if the extracellular concentration is 4M, the intracellular solute concentration is between 3.6 and 4.4M. Preferably, there is no more than a 5% difference between the intracellular and extracellular concentrations.

Vitrification can be achieved using a variety of cryoprotectant mixtures and cooling/warming conditions. The key variables should be optimized for each particular cell or tissue type and sample size. The choice of cryoprotectant mixtures and the equilibration steps necessary for cryoprotectant addition and removal without undue osmotic shock should be optimized based upon measured kinetics of cryoprotectant permeation in tissue samples. Cryosubstitution can also be employed to verify that ice-free preservation has been achieved for a given protocol.

In methods of the present invention, the tissue or organ is immersed in increasing concentrations of cryoprotectant solution at a temperature greater than - 5°C. Organs and tissues containing blood vessels may be perfused, instead of, or in conjunction with, immersion. The temperature is preferably between 0°C and 15°C, more preferably between 0°C and 10°C. Preferably, the tissue or organ is also perfused with the increasing concentrations of cryoprotectant.

The increase in concentration is preferably conducted in a step-wise manner. That is, cryoprotectant is added to the extracellular solution to achieve a particular concentration of cryoprotectant. After this concentration level is obtained; the concentration of the solution is then substantially maintained for a period of time. In particular, the concentration level is generally maintained for a sufficient time to permit approximate osmotic equilibration of the tissue or organ in the solution. To obtain approximate osmotic equilibration, the concentration level is generally maintained for at least 10 minutes. In a preferred embodiment, the concentration level is maintained for at least 15 minutes. This process is repeated as many times as necessary, with the final concentration being sufficient for vitrification at physiological pressures, particularly under normal atmospheric conditions. In addition, the tissue or organ is generally maintained at each concentration level for no more than an hour, preferably for no more than 30 minutes.

In general, the tissue or organ is first immersed in a cryoprotectant-free solution. The tissue or organ may also be perfused with the cryoprotectant-free solution. This cryoprotectant-free solution can be any type of solution that maintains cellular integrity under in vitro conditions as typified by synthetic physical buffers at normal temperatures, and organ preservation solutions at hypothermic temperatures. Most typically, the initial cryoprotectant-free solution will be the same as the vehicle solution used to add and remove cryoprotectants in the tissue or organ. For example, the cryoprotectant-free solution can be a Euro-Collins solution, which is an aqueous solution described in Table 1 below.

**TABLE 1**

| Euro-Collins* | | |
|---|---|---|
| Compound | mM | g/l |
| Dextrose | 194 | 34.96 |
| KH₂PO₄ | 15 | 2.06 |
| K₂HPO₄ | 42 | 7.40 |
| KCl | 15 | 1.12 |
| NaHCO₃ | 10 | 0.84 |

| | | |
|---|---|---|
| * pH = 7.4 * milliosmolality = 350-365 milliosmolal | | |

Other examples of suitable aqueous solutions are discussed in Tables 2 and 3 below.

**TABLE 2**

| Modified RPS-2 | | |
|---|---|---|
| Compound | mM | g/l |
| Dextrose | 180 | 32.43 |
| K₂HPO₄ | 7.2 | 1.25 |
| KCl | 28.2 | 2.11 |
| NaHCO₃ | 10 | 0.84 |
| Glutathione | 5 | 1.53 |
| Adenine HCl | 1 | 0.17 |
| CaCl₂ | 1 | 0.111 |
| MgCl₂ | 2 | 0.407 |
| (Note: RPS-2™ solution is modified RPS-2 without CaCl₂ and also without MgCl₂) | | |

**TABLE 3**

| Modified UW Solution #1 | | | Modified UW Solution #2 | | |
|---|---|---|---|---|---|
| Compound | mM | g/l | Compound | mM | g/l |
| NaH₂PO₄·H₂O | 25 | 3.45 | NaH₂PO₄·H₂O | 25 | 3.45 |
| K gluconate | 100 | 23.42 | K gluconate | 100 | 23.42 |
| Mg gluconate | 1 | 0.21 | Mg gluconate | 1 | 0.21 |
| glucose | 5 | 0.90 | glucose | 15 | 2.70 |
| glutathione | 3 | 0.92 | glutathione | 3 | 0.92 |
| adenosine | 5 | 1.34 | adenosine | 5 | 1.34 |
| HEPES | 10 | 2.38 | HEPES | 10 | 2.38 |
| adenine (hydrochloride) | 1 | 0.17 | adenine (hydrochloride) | 1 | 0.17 |
| ribose | 1 | 0.15 | ribose | 1 | 0.15 |
| CaCl₂ | 0.05 | 0.0056 | CaCl₂ | 0.05 | 0.0056 |
| HES(g) | -- | 50 | -- | ----- | ----- |
| (Note: Modified UW Solution #2 does not contain HES but contains more glucose than modified UW Solution #1) | | | | | |

After being immersed in a cryoprotectant-free solution, the tissue or organ is immersed in a solution containing cryoprotectant with or without perfusion. (An advantage of the present invention is that perfusion is not necessarily required.) A cryoprotectant concentration sufficient for vitrification generally contains from 6.0 to 9.5M cryoprotectant, preferably from 7 to 9M cryoprotectant, more preferably from 8 to 9M cryoprotectant. The cryoprotectant solution may contain any combination of cryoprotectants sufficient for vitrification. Cryoprotectants include, but are not limited to, dimethyl sulfoxide, formamide, 1,2-propanediol, 2,3-butanediol, glycerol, ethylene glycol, n-dimethyl formamide and 1,3-propanediol.

Impermeable cryoprotectant agents such as polyvinylpyrrolidone or hydroxyethyl starch may be more effective at protecting biological systems cooled at rapid rates. Such agents are often large macromolecules, which effect the properties of the solution to a greater extent than would be expected from their osmotic pressure. Some of these non-permeating cryoprotectant agents have direct protective effects on the cell membrane. However, the primary mechanism of action appears to be the induction of extracellular glass formation. When such cryoprotectants are used in extremely high concentrations, ice formation may be eliminated entirely during cooling to and warming from cryogenic temperatures. Impermeable chemicals with demonstrated cryoprotective activity include agarose, dextrans, glucose, hydroxyethylstarch; inositol, lactose, methyl glucose, polyvinylpyrrolidone, sorbitol, sucrose and urea.

In a particular embodiment of the present invention, the cryoprotectant solution contains dimethyl sulfoxide, formamide, and 1,2-propanediol. For example, the cryoprotectant solution may be a solution called VS55. VS55 is a solution containing 24.2% w/v (3.1M) dimethyl sulfoxide, 16.8% w/v (2.2M) 1,2-propanediol, and 14.0% w/v (3.1M) formamide in a vehicle solution, such as Euro-Collins solution. Thus, the solution contains about 55% w/v cryoprotectant or 8.4M cryoprotectant. The amount of dimethyl sulfoxide may be varied from 20 to 30% w/v. Similarly, the amount of 1,2-propanediol and formamide may each be varied from about 10 to 20% w/v. However, the total amount of cryoprotectant in the full strength solution should be between 45% w/v to 60% w/v, preferably from about 50% w/v to 55% w/v.

VS55 may also be modified with conventional cryoprotectants and/or natural or synthetic ice-blocking molecules, for example, acetamide, agarose, alginate, alanine, albumin, ammonium acetate, anti-freeze proteins, butanediol, chondroitin sulfate, chloroform, choline, cyclohexanediols, cyclohexanediones, cyclohexanetriols, dextrans, diethylene glycol, dimethyl acetamide, dimethyl formamide, erythritol, ethanol, ethylene glycol, ethylene glycol monomethyl ether, glucose, glycerol, glycerophosphate, glyceryl monoacetate, glycine, glycoproteins, hydroxyethyl starch, inositol, lactose, magnesium chloride, magnesium, sulfate, maltose, mannitol, mannose, methanol, methoxy propanediol, methyl acetamide, methyl formamide, methyl ureas, methyl glucose, methyl glycerol, phenol, pluronic polyols, polyethylene glycol, polyvinylpyrrolidone, proline, pyridine N-oxide, raffinose, ribose, serine, sodium bromide, sodium chloride, sodium iodide, sodium nitrate, sodium nitrite, sodium sulfate, sorbitol, sucrose, trehalose, triethylene glycol, trimethylamine acetate, urea, valine and/or xylose.

In addition, in further preferred embodiments of the invention, 1,2-propanediol may be replaced by similar concentrations of 2,3-butanediol. Similarly, dimethyl sulfoxide may be replaced by similar concentrations of glycerol or ethylene glycol or combinations thereof.

The vehicle for the cryoprotectant solution may be any type of solution that maintains cellular integrity under in vitro conditions. In particular, the vehicle generally comprises slowly penetrating solutes. In VS55, the vehicle solution is a Euro-Collins solution containing 10mM HEPES. HEPES is included as a buffer and may be included in any effective amount. In addition, other buffers, as well as no buffer, may be used. Alternative vehicles include, but are not limited to, the solutions discussed in Tables 2 and 3 above.

The final concentration of the perfusion solution is sufficient to vitrify the tissue or organ. However, as discussed above, the concentration of the solution is gradually increased to achieve this level, preferably in a step-wise manner. In particular, cryoprotectant is added to achieve a particular plateau, which is maintained for a sufficient time to achieve approximate osmotic equilibration, in particular for at least 10 minutes and preferably for about 15 minutes. Then, further cryoprotectant is added to increase the cryoprotectant concentration, which may or may not be a level sufficient for vitrification. If not, after maintaining the concentration for sufficient time to achieve approximate osmotic equilibration, further cryoprotectant is added in one or more steps to achieve a concentration sufficient for vitrification.

In a preferred embodiment of the invention, there are four cryoprotectant concentration plateaus before reaching the concentration sufficient for vitrification. In this preferred embodiment, there are thus six steps, the first step using a cryoprotectant-free solution, which is followed by four increasing cryoprotectant concentration plateaus and then a cryoprotectant concentration sufficient for vitrification. In a particularly preferred six step embodiment, in step 1, no cryoprotectant is used; in step 2, 5 to 20%, preferably 10 to 15%, of the final cryoprotectant concentration is used; in step 3, 15 to 35%, preferably 20 to 30%, of the final cryoprotectant concentration is used; in step 4, 40 to 60%, preferably 45 to 55%, of the final cryoprotectant concentration is used; in step 5, 65 to 85%, preferably 70 to 80%, of the final cryoprotectant concentration is used; and in step 6, the final cryoprotectant concentration, which is sufficient for vitrification, is used. Each cryoprotectant concentration step is maintained for a sufficient time to achieve approximate osmotic equilibration. In a further preferred embodiment, the tissue or organ is perfused with the solution at each step.

After the tissue or organ has been immersed in a solution containing a concentration of cryoprotectant sufficient for vitrification, the tissue or organ, which is maintained in a solution containing a concentration of cryoprotectant sufficient for vitrification, is rapidly cooled to a temperature between -80°C and the glass transition temperature. The rapid cooling rate may be from 2.5 to 100°C per minute. The rapid cooling rate is generally at least 15, 20, 25 or 30°C per minute. The average cooling rate during this step is preferably from 10 to 80°C, more preferably from 30-60°C per minute, even more preferably from 35-50°C per minute, and even further more preferably from 40-45°C per minute. The temperature to which the tissue or organ is cooled during this rapid cooling process is preferably between -90 and -110°C, more preferably between -95 and -105°C.

After the tissue or organ undergoes this rapid cooling process, the tissue or organ then undergoes a slow cooling process in which the tissue or organ is cooled at an average rate less than 30°C per minute, preferably at an average rate less than 10°C per minute from a temperature above the glass transition temperature to a temperature below the glass transition temperature to vitrify the tissue or organ. The cooling process is preferably conducted at an average rate less than 5°C per minute. Preferably, the rate of cooling during this entire step does not increase above 30°C per minute, more preferably the rate of cooling does not increase above 10°C per minute and even more preferably the rate of cooling does not increase above 5°C per minute. The glass transition temperature is generally about -120°C to -135°C under normal atmospheric conditions. The tissue or organ can then be stored for long period of time at a temperature below the glass transition temperature.

The first cooling rate is generally faster than the second cooling rate; however, in embodiments, the two cooling rates can be the same.

In an embodiment of the invention, the slow cooling rate is achieved by changing the environment in which the container containing the solution is placed. In a particular embodiment, the rapid cooling rate is achieved by placing the container in a liquid, such as 2-methylbutane, that has been pre-cooled to a temperature below - 100°C, preferably near or below the glass transition temperature of the solution to be cooled. Then, to achieve the slow cooling rate, the container is removed from the liquid and cooled in a gaseous environment at a temperature below the glass transition temperature.

The present invention is also directed to a method for removing a tissue or organ from vitrification in a cryoprotectant solution with or without perfusion. The method comprises slowly warming a vitrified tissue or organ in the cryoprotectant solution to a temperature between -80°C and the glass transition temperature. The slow warming rate is generally below 50°C per minute. In addition, the average warming rate during this stage is generally from 20-40°C per minute, preferably from 25-35°C per minute. In addition, the temperature to which the vitrified tissue or organ is slowly warmed is preferably between -90 and -110°C, more preferably between -95 and -105°C.

After the tissue or organ has undergone this slow warming process, the tissue or organ is then rapidly warmed to a temperature above -75°C. The temperature should be sufficiently high that the solution is sufficiently fluid that the tissue or organ can be removed therefrom. The rapid warming process is generally conducted at a rate above 80°C per minute, preferably above 100°C per minute. The average warming rate during this step is preferably from 200-300°C per minute, more preferably from 215-250°C per minute. The tissue or organ is preferably warmed in this process to a temperature above -75°C, such as above -35°C. However, in a further embodiment of the invention, the tissue or organ is warmed in this step to a temperature above -5°C, preferably between -5°C and +5°C.

In an embodiment of the invention, the rapid warming rate is achieved by changing the environment in which the container containing the solution is placed. In a particular embodiment, the slow warming rate is achieved by placing the container in a gaseous environment at a temperature above the temperature at which the tissue or organ has been stored. Then, to achieve the rapid warming rate, the container is placed in a liquid, such as an aqueous solution of, for example, dimethyl sulfoxide (DMSO), at a temperature above -75°C, preferably above 0°C, and more preferably at normal atmospheric temperatures.

After the tissue or organ has been warmed to a temperature above - 65°C, the concentration of the cryoprotectant in the solution is gradually reduced. Preferably, the cryoprotectant concentration is reduced in a step-wise manner. In an embodiment of the invention, decreasing cryoprotectant solutions are achieved by immersing the tissue or organ in a series of decreasing cryoprotectant concentration solutions to facilitate elution of cryoprotectants from the tissue or organ. The tissue or organ may also be perfused with the solutions. The solutions are generally at a temperature above -15°C, preferably between -15 and +15°C, more preferably between 0°C and 10°C.

The cryoprotectant concentration is preferably reduced to achieve a particular plateau, which is maintained for a sufficient time to achieve approximate osmotic equilibration, in particular for at least 10 minutes and preferably for about 15 minutes. Then, the cryoprotectant concentration is further reduced, which may or may not provide for a cryoprotectant-free solution. If not, after maintaining the concentration for sufficient time to achieve approximate osmotic equilibration, the cryoprotectant concentration is again further reduced in one or more steps to eventually provide a cryoprotectant-free solution. In addition, the tissue or organ is generally immersed in each solution for no longer than an hour, preferably no longer than 30 minutes.

To decrease the cryoprotectant concentration, the cryoprotectant solution may be mixed with a solution of a type similar to the cryoprotectant-free solution utilized in adding cryoprotectant to the tissue or organ. The solution preferably comprises at least one osmotic buffering agent.

The vitrification methods of the present invention typically result in a greater number or percentage of viable cells in a tissue or organ sample as compared to conventional cryopreservation techniques involving freezing. The methods of the present invention generally result in tissue or organ samples having at least 50% viable cells. In embodiments, the methods of the present invention result in tissue or organ samples having at least 60% viable cells, for example at least 80% viability, such as at least 90% viability. The present invention can also result in at least 70%, preferably at least 80%, of cell functions and graft functions being maintained relative to fresh untreated controls.

As used herein, "osmotic buffering agent" means a low or high molecular weight non-penetrating extracellular solute that counteracts the osmotic effects of the greater intracellular than extracellular concentrations of cryoprotectant during the cryoprotectant efflux process.

As used herein "non-penetrating" means that the great majority of molecules of the chemical do not penetrate into the cells of the tissue or organ but instead remain in the extracellular fluid of the tissue.

As used herein, "low molecular weight osmotic buffering agents" have a relative molecular mass of 1,000 daltons or less. Low molecular weight osmotic buffering agents include, but are not limited to, maltose, potassium and sodium fructose 1,6-diphosphate, potassium and sodium lactobionate, potassium and sodium glycerophosphate, maltopentose, stachyose, mannitol, sucrose, glucose, maltotriose, sodium and potassium gluconate, sodium and potassium glucose 6-phosphate, and raffinose. In a preferred embodiment, the low molecular weight osmotic buffering agent is at least one of mannitol, sucrose and raffinose.

As used herein, "high molecular weight cryoprotectant and osmotic buffering agents" generally have a relative molecular mass of from greater than 1,000 to 500,000 daltons. High molecular weight osmotic buffering agents include, but are not limited to, hydroxyethyl starch (HES), polyvinylpyrrolidone (PVP), potassium raffinose undecaacetate (> 1,000 daltons) and Ficoll (greater than 1,000 to 100,000 daltons). In a preferred embodiment, the high molecular weight osmotic buffering agent is HES, more preferably having a molecular weight of about 450,000.

The cryoprotectant-free solution preferably contains less than about 500mM of an osmotic buffering agent, more preferably from about 200 to 400mM osmotic buffering agent. As the osmotic buffering agent, preferably a low molecular weight osmotic buffering agent is used. Most preferably, the low molecular weight osmotic buffering agent is mannitol.

In a particularly preferred embodiment, the cryoprotectant is removed in seven steps. In the preferred embodiment, in step 1, the cryoprotectant concentration is 40 to 60%, preferably 45 to 55%, of the cryoprotectant concentration used for vitrification; in a step 2, the cryoprotectant concentration is 30 to 45%, preferably 35 to 40%, of the cryoprotectant concentration used for vitrification; in step 3, the cryoprotectant concentration is 15 to 35%, preferably 20 to 30%, of the cryoprotectant concentration used for vitrification; in step 4, the cryoprotectant concentration is 5 to 20%, preferably 10 to 15%, of the cryoprotectant concentration used for vitrification; and in step 5, the cryoprotectant concentration is 2.5 to 10%, preferably 5 to 7.5%, of the cryoprotectant concentration used for vitrification. In these steps, the remainder of the solution is a cryoprotectant-free solution containing osmotic buffering agent. In step 6, essentially all of the cryoprotectant is removed. However, the osmotic buffering agent is retained. In step 7, the osmotic buffering agent is removed. Alternatively, steps 6 and 7 can be combined in a single step. That is, the osmotic buffering agent can be removed at the same time as the remainder of the cryoprotectant. In addition, if no osmotic buffering agent is used or if it is not removed, step 7 can be eliminated. Each of these concentration steps is maintained for a sufficient time to achieve approximate osmotic equilibration.

The temperature of the series of solutions is generally above -15°C , preferably between -15 and + 15°C, and more preferably between 0°C and +10°C. When step 1 is begun, the tissue or organ is at a temperature above -75°C, preferably above -65°C. Thus, if the temperature of the tissue or organ is below the temperature of the solution in which it is immersed in step 1, the tissue or organ is further warmed to a temperature above -15°C during step 1 of the cryoprotectant removal.

The tissue or organ may be further processed before or after vitrification and/or devitrification. For example, tissues or organs can be revitalized before and/or after vitrification and devitrification by perfusion processes such as those described in U.S. Patent Application No. 09/645,525. Tissues or organs can be genetically engineered before vitrification, and/or can be re-engineered after devitrification, for example by the cartilage digestion and cellular proliferation processes described in Binette F, McQuaid DP, Haudenschild DR, Yaeger PC, McPherson JM, Tubo R, "Expression of a Stable Articular Cartilage Phenotype without Evidence of Hypertrophy by Adult Human Articular Chondrocytes *In Vitro*", *J Orthop Res*, Vol. 16, No. 2, 1998, and Stone BB, DeFranzo BE, DiCesare C, Rapko SM, Brockbank KGM, Wolfrum JM, Wrenn CA, Grosman JD, "Cryopreservation of Human Articular Cartilage for Autologous Chondrocyte Implantation" presented at 35^{th} Annual Meeting of Society for Cryobiology, July 1998. Alternatively, tissues or organs can be vitrified substantially directly after harvest and/or transplanted substantially directly after devitrification.

### EXAMPLES

### Example 1: Vascularized Tissue

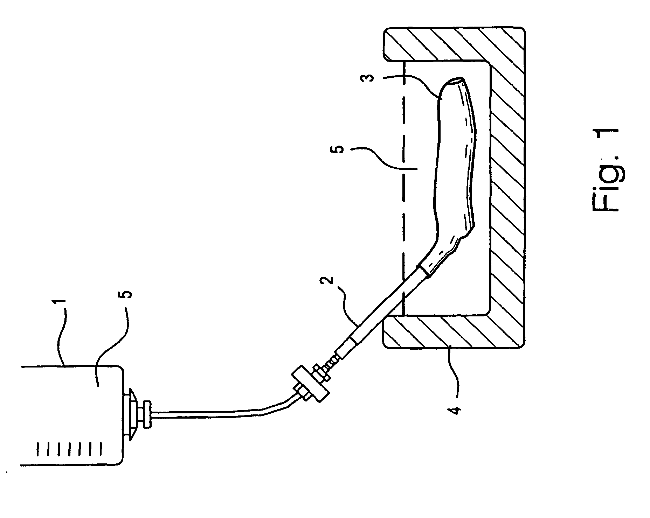

To perfuse the tissue, the perfusion system of Fig. 1 may be used. The perfusion system comprises a reservoir 1 (a 60cc syringe) containing perfusion solution 5 connected to the cannula 2 with a 3-way stopcock. The reservoir I is adjusted to physiologic pressure. The tissue 3 is placed in a petri dish 4 (Dia. x H, 50x 15 mm) containing perfusion solution 5. The perfusion solution 5 in both reservoir 1 and petri dish 4 is the same and is pre-cooled (0°C-4°C) and the petri dish 4 is placed in ice (0°C-4°C) during the perfusion process.

The vitrification solution used is VS55. The full strength VS55 solution is introduced in six serial steps. In the first step, the tissue is perfused with Euro-Collins solution, which is the carrier of VS55. In steps two to five, respectively, the amount of full strength VS55 in the solution is as follows: 1/8 VS55, 2/8 VS55; 4/8 VS55; and 6/8 VS55. In each case, the remainder of the solution is Euro-Collins solution. In the sixth step, the perfusion solution is full strength VS55. Exposure at each step is for 15 minutes.

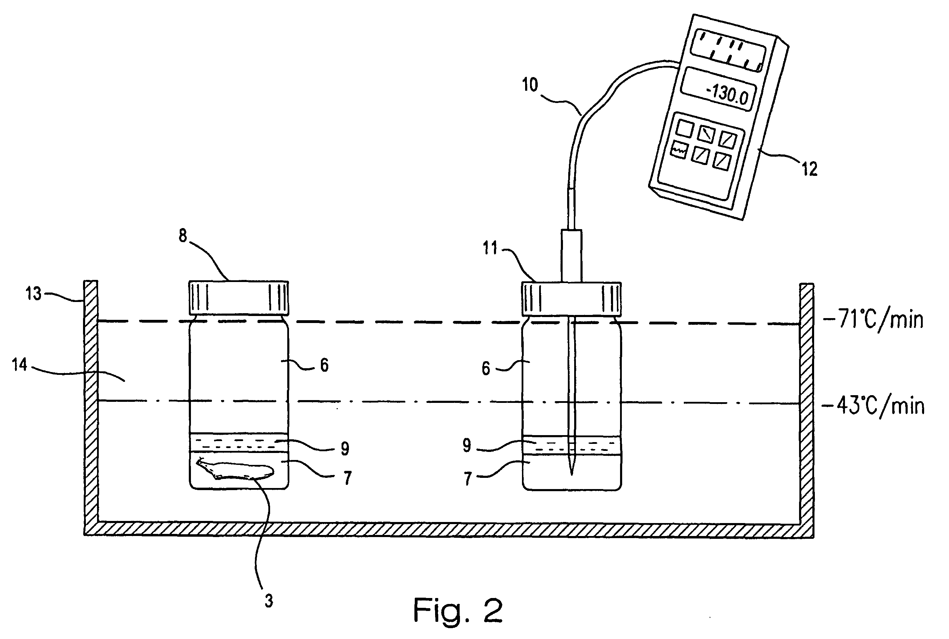

After addition of the vitrification solution, the tissue is rapidly cooled using the device demonstrated in Fig. 2. The tissue 3, together with the silicone tube, is placed in a glass scintillation vial 6 (Dia. x H, 25x60 mm) containing 1 ml of pre-cooled full strength VS55 solution 7 to form the sample 8. The top of the vitrification solution 7 is covered with 0.7 ml of 2-methylbutane 9 (isopentane, freezing point: -160°C, density: 0.62) at 0°C to 4°C to prevent direct contact with air. A thermocouple 10 is inserted into a dummy sample 11 of the vitrification solution 7, and its output is monitored on a digital thermometer 12. Temperature is recorded throughout the cooling process.

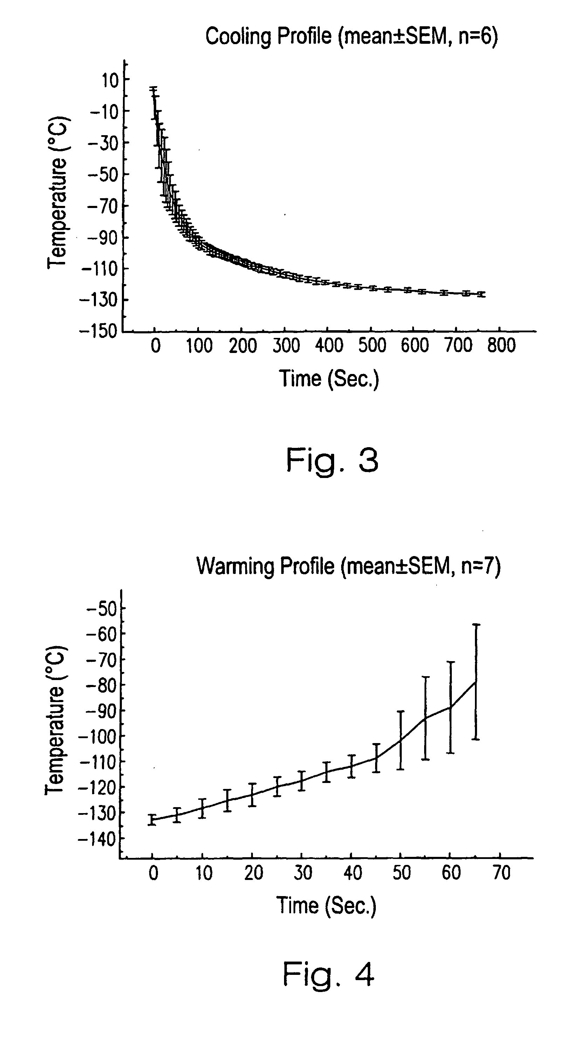

The cooling apparatus is set up inside a -135°C freezer. The cooling rates are adjusted by placing the sample in a container 13 containing precooled 2-methylbutane 14. The cooling rates could be varied depending on the depth the vial was placed in 2-methylbutane (30 mm generate a cooling rate of 43°C/min; 60 mm generate cooling rate 71°C/min). By this technique, the samples are cooled rapidly (average rate = 43±2°C/min) to -100°C. The samples are then slowly cooled (average rate = 3±0.2°C/min) to -135°C by taking the sample out of the container 13 of 2-methylbutane 14 and allowing the air in the -135°C freezer to complete the cooling process. Fig. 3 shows an exemplary cooling profile using the technique of placing the glass scintillation vial 30 mm deep in precooled (-135°C) 2-methylbutane. The sample is then stored in the -135°C freezer for at least 24 hours.

After being stored for 24 hours, the tissue is rewarmed in two stages, slow warming to -100°C (average rate = 30±2°C/min) and rapid warming to -65°C (average rate = 225±15°C/min). The slow warming rate is created by taking the sample to the top of the -135°C freezer and the fast warming rate is generated by placing the glass vial in a mixture of 30% DMSO/H₂O at room temperature. Fig. 4 shows an exemplary warming profile using this technique.

The VS55 vitrification solution is then removed in seven steps, using the perfusion system of Fig. 1. The perfusion solution 5 in both reservior 1 and petri dish 4 is the same and is pre-cooled (0°C-4°C) and the petri dish 4 is placed in ice (0°C to 4°C) during the perfusion process. Thus, during the first step the tissue is further warmed to a temperature between 0°C and 4°C.

In all of the steps except the last step, the solution contains, in addition to the cryoprotectant solution, 400 to 200mM mannitol. In steps one to five, the amount of full strength VS55 in the solution is as follows: 4/8 VS55; 3/8 VS55; 2/8 VS55; 1/8 VS55; and 0.5/8 VS55, with the remainder of the solution being a mannitol-containing Euro-Collins solution. (The 4/8 strength VS55 solution contains 400mM mannitol and the cryoprotectant-free Euro-Collins solution that is mixed therewith to form the lower cryoprotectant concentration solutions contains 200mM mannitol. Thus, as the amount of VS55 is decreased, the amount of mannitol is decreased between 400 and 200 mM.) In step six, Euro-Collins solution containing 200mM mannitol is used. In step 7, a Euro-Collins solution that does not contain mannitol is used. Exposure at each step is for 15 minutes.

### Example 2: Cartilage

Pig cartilage was used in this study. The sample size was varied from 100-300 mg, and >300 mg. The experiments included fresh control and vitrification groups. The tissue viability was tested using Alamar Blue assay.

Outbred pigs of either sex, weighing 30-60 kg, were selected in this pilot study. The animal was weighed and then anesthesia was induced with 33 mg/kg ketamine and 1.1 mg/kg acepromazine, and isoflurane was delivered in oxygen via a face mask. After intubation, anesthesia was maintained using isoflurane delivered in oxygen. Pig knee cartilage was harvested for subsequent studies.

Prior to subzero cooling, the cartilage tissue samples were exposed to the cryoprotectant mixture by adding the vitrification solution VS55 in six steps, for 15 minutes each, on ice (4°C). This was accomplished in a glass scintillation vial (Dia. x H, 25mm x 60 mm) containing Euro-Collins solution, with successive steps increasing the concentration of cryoprotectant in the solution, until the cartilage samples were immersed in full strength VS55 at 4°C. The surface of the vitrification solution was covered at 4°C with 0.7 ml of 2-methylbutane to prevent direct contact with air. Samples were cooled rapidly (31 °C/min) to -100°C, followed by slow cooling (2°C/min) to -135°C, and finally stored in a freezer at -135°C for at least 24 hours. Each vitrified cartilage sample was rewarmed in two stages, slow warming to -100°C (27°C/min) and rapid warming to approximately -35°C (169°C/min). After the samples were rewarmed, the VS55 was removed in a stepwise manner (seven steps, 15 minutes each, on ice, starting with full strength VS55 and decreasing the concentration of cryoprotectant in the solution in successive steps) to minimize osmotic shock to the cells.

The Alamar Blue assay was employed as a non-cell specific viability assay. This assay was used to determine cell survival following procurement (fresh) and vitrification treatment. It incorporates a water soluble fluorometric viability indicator based on the detection of metabolic activity, specifically, an oxidation-reduction (REDOX) indicator which both fluoresces and changes color in response to chemical reduction of the growth medium caused by cell metabolism. The REDOX indicator has the additional advantage of being minimally toxic to cells and this allows multiple tests to be performed on the same tissue specimen. Aliquots of medium from tissue samples incubated with Alamar Blue working solution for 3-6 hours prior to being placed in microtiter plate wells were read on a microtiter plate spectrofluorometer at 590nm. The data was normalized to the weight of tissue samples and expressed in percent as the mean ±1se Alamar Blue fluorescence intensity for 11 or more replicate samples of untreated controls.

The results of this pilot study are summarized in Table 4, below. Viability is expressed as relative fluorescence units (RFU) relative to the wet weight of the cartilage (Mean±SEM). Fluorescence was read using the Fmax microplate reader with an excitation wavelength of 544 nm and an emission wavelength of 590 nm. N= 15, fresh controls; n= 11, vitrified. It can be seen that the average cell survival of vitrified cartilage tissue was about 91.5% (27.13±6.64) compared with fresh controls (29.65±3.04). This study demonstrated that the improved cell recovery in the vitrified cartilage shows that this approach to cryopreservation offers an encouraging solution to the long-term storage of cartilage tissues.

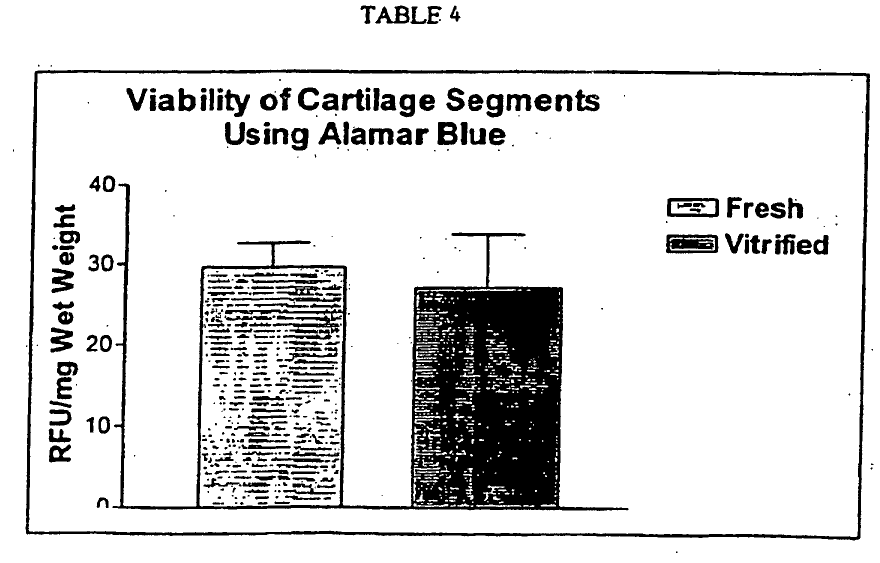

This example, using a novel vitrification approach, showed that a dramatically improved cell survival was achieved by employing vitreous cryopreservation of cartilage. In marked contrast, it has been reported by other investigators that conventional cryopreservation of cartilage reduced the number of viable cells released from the tissue by collagenase/trypsin digestion to less than 20% of fresh control tissue (range 0-20%). These results clearly demonstrate that vitrified cartilage is markedly superior to conventionally cryopreserved cartilage. This example suggests the higher cell recovery in intact articular cartilage is a direct result of avoidance of ice formation, and corroborates the known mechanisms of cryoinjury in multicellular tissues.

### Example 3: Additional Tissues

Pigs were selected as an animal model for a source of various tissues for testing the feasibility of vitrification for long-term storage of tissues. The sample size was varied from <100 mg and 100-300 mg. These pilot experiments included fresh control and vitrification groups. The tissue viability was tested using the Alamar Blue assay.

Outbred pigs of either sex, weighing 30-60 kg, were selected in this experiment. The animal was weighed and then anesthesia was induced with 33 mg/kg ketamine and 1.1 mg/kg acepromazine, and isoflurane was delivered in oxygen via a face mask. After intubation, anesthesia was maintained using isoflurane delivered in oxygen. Pig heart valves, myocardium, skin and corneas were harvested for subsequent studies.

Prior to subzero cooling, the tissue samples were exposed to the cryoprotectant mixture by adding the vitrification solution VS55 in six steps, for 15 minutes each, on ice (4°C). This was accomplished in a glass scintillation vial (Dia. x H, 25mm x 60 mm) containing Euro-Collins solution, with successive steps increasing the concentration of cryoprotectant in the solution, until the samples were immersed in the full strength VS55 at 4°C. The surface of the vitrification solution was covered at 4°C with 0.7 ml of 2-methylbutane to prevent direct contact with air. Samples were cooled rapidly (20°C/min) to -100°C, followed by slow cooling (2°C/min) to -135°C, and finally stored in a freezer at -135°C for at least 24 hours. Each vitrified sample was rewarmed in two stages, slow warming to -100°C (26°C/min) and rapid warming to approximately -35°C (216°C/min). After the samples were rewarmed, the VS55 was removed in a stepwise manner (seven steps, 15 minutes each, on ice, starting with full strength VS55 and decreasing the concentration of cryoprtoectant in the solution in successive steps) to minimize osmotic shock to the cells.

The Alamar Blue assay was employed as a non-cell specific viability assay. This assay was used to determine cell survival following procurement (fresh) and vitrification treatment. Aliquots of medium from tissue samples incubated with Alamar Blue working solution for 2 to 24 hours prior to being placed in microtiter plate wells were read on a microtiter plate spectrofluorometer at 590nm. The data was normalized to the weight of tissue samples and expressed in percent as the mean ±1se Alamar Blue fluorescence intensity for 6 or more replicate samples of untreated controls.

The results of this study are summarized in Table 5. Viability is expressed as relative fluorescence units (RFU) relative to the wet weight of the tissues (Mean±SEM). Fluorescence was read using the Fmax microplate reader with an excitation wavelength of 544 nm and an emission wavelength of 590 nm. It can be seen that the average viability of vitrified tissues was about 73 % (range from 61% to 88%) compared with fresh controls. These examples demonstrate that the improved cell recovery in the vitrified tissues shows this approach to cryopreservation offers an encouraging solution to the long-term storage of tissues.

**Table 5**

| **Tissues** | **Fresh** | | **Vitrified** | | **% Fresh** |
|---|---|---|---|---|---|
| | **n** | **Mean±SEM** (RFU/mg) | **n** | **Mean±SEM** (RFU/mg) | |
| Heart Valve | 6 | 56 ± 7 | 10 | 44 ± 15 | 79 |
| Myocardium Tissue | 6 | 24 ± 7 | 12 | 21 ± 3 | 88 |
| Cornea | 6 | 13 ± 5 | 6 | 8 ± 1 | 62 |
| Skin | 6 | 18 ± 8 | 12 | 11 ± 7 | 61 |
| SEM is standard error of the mean | | | | | |
| n = number of samples tested | | | | | |
| % Fresh = average viability of vitrified samples expressed as percentage of fresh controls | | | | | |
| RFU = Relative Fluorescence Units | | | | | |

## Claims

1. A method for vitrification of a natural or engineered tissue or organ other than a blood vessel, comprising:
(i) immersing the tissue or organ other than a blood vessel in a series of solutions having increasing concentrations of cryoprotectant to achieve a cryoprotectant concentration sufficient for vitrification, each solution of said series of solutions having a temperature above -15°C;
(ii) cooling the tissue or organ in a solution having said cryoprotectant concentration sufficient for vitrification at an average rate of from 2.5 to 100°C per minute from a temperature above -15°C to a temperature between -80°C and the glass transition temperature; and
(iii) further cooling the tissue or organ at an average rate less than 30°C per minute from a temperature that is between -80°C and the glass transition temperature to a temperature below the glass transition temperature to vitrify the tissue or organ.

2. A method for removing a tissue or organ other than a blood vessel from vitrification in a solution containing cryoprotectant, comprising:
(a) warming the vitrified tissue or organ other than a blood vessel in said solution containing cryoprotectant at an average rate of from 20 to 40°C per minute to a temperature between -80°C and the glass transition temperature;
(b) further warming the tissue or organ in said solution at an average rate of from 200 to 300°C per minute to a temperature above -75°C, wherein, at said temperature, the solution is sufficiently fluid that the tissue or organ can be removed therefrom; and
(c) immersing the tissue or organ in a series of solutions having decreasing concentrations of cryoprotectant to obtain a tissue or organ in a cryoprotectant-free solution.

3. A method for vitrification of a tissue or organ other than a blood vessel and subsequent removal from vitrification, comprising:
(i) immersing the tissue or organ other than a blood vessel in a series of solutions having increasing concentrations of cryoprotectant to achieve a cryoprotectant concentration sufficient for vitrification, each solution of said series of solutions having a temperature above -15°C;
(ii) cooling the tissue or organ in a solution having said cryoprotectant concentration sufficient for vitrification at an average rate of from 2.5 to 100°C per minute from a temperature above -15°C to a temperature between -80°C and the glass transition temperature;
(iii) further cooling the tissue or organ at an average rate less than 30°C per minute from a temperature that is between -80°C and the glass transition temperature to a temperature below the glass transition temperature to vitrify the tissue or organ;
(a) warming the vitrified tissue or organ at an average rate of from 20 to 40°C per minute to a temperature between -80°C and the glass transition temperature;
(b) further warming the tissue or organ at an average rate of 200 to 300°C per minute to a temperature above -75°C; and
(c) immersing the tissue or organ in a series of solutions having decreasing concentrations of cryoprotectant to obtain a tissue or organ in a cryoprotectant-free solution.

4. The method of claim 1 or 3, wherein cooling the tissue or organ from a temperature above -15°C to a temperature between -80°C and the glass transition temperature is performed at an average rate of at least 10°C per minute.

5. The method of claim 1 or 3, wherein cooling the tissue or organ from a temperature above -15°C to a temperature between -80°C and the glass transition temperature is performed at an average rate of at least 15°C per minute.

6. The method of claim 1 or 3, wherein cooling the tissue or organ from a temperature above -15°C to a temperature between -80°C and the glass transition temperature is performed at an average rate of at least 20°C per minute.

7. The method of claim 1 or 3, wherein cooling the tissue or organ from a temperature above -15°C to a temperature between -80°C and the glass transition temperature is performed at an average rate of from 10 to 80°C per minute.

8. The method of claim 1 or 3, wherein cooling the tissue or organ from a temperature above -15°C to a temperature between -80°C and the glass transition temperature is performed at an average rate of from 30 to 60°C per minute.

9. The method of claim 1 or 3, wherein cooling the tissue or organ from a temperature that is between -80°C and the glass transition temperature to a temperature below the glass transition temperature is performed at an average rate less than 10°C per minute.

10. The method of claim 1 or 3, wherein cooling the tissue or organ from a temperature that is between -80°C and the glass transition temperature to a temperature below the glass transition temperature is performed at a slower rate than the rate for cooling the tissue or organ from a temperature above -15°C to a temperature between -80°C and the glass transition temperature.

11. The method of claim 1 or 3, wherein cooling the tissue or organ from a temperature that is between -80°C and the glass transition temperature to a temperature below the glass transition temperature is performed at the same rate as the rate for cooling the tissue or organ from a temperature above -15°C to a temperature between -80°C and the glass transition temperature.

12. The method of claim 1 or 3, wherein the immersion step (i) comprises:
immersing the tissue or organ in a cryoprotectant-free solution;
immersing the tissue or organ in at least one solution containing cryoprotectant at a concentration less than said concentration sufficient for the vitrification; and
immersing the tissue or organ in a solution containing cryoprotectant at said concentration sufficient for vitrification.

13. The method of claim 12, wherein, in each of the steps of immersion step (i), the tissue or organ is immersed in the solution for a sufficient time to achieve approximate osmotic equilibration.

14. The method of claim 12, wherein, in each of the steps of immersion step (i), the tissue or organ is immersed in the solution for at least 10 minutes.

15. The method of claim 12, wherein the second step of immersion step (i) comprises immersing the tissue or organ in a series of four solutions having increasing concentrations of cryoprotectant, each of which has a cryoprotectant concentration less than said concentration sufficient for vitrification.

16. The method of claim 15, wherein the tissue or organ is immersed in each solution of said series of four solutions for a sufficient time to achieve approximate osmotic equilibration.

17. The method of claim 15, wherein the tissue or organ is immersed in each solution of said series of four solutions for at least 10 minutes.

18. The method of claim 15, said four increasing concentrations being 5 to 20% of said cryoprotectant concentration sufficient for vitrification; 15 to 35% of said cryoprotectant concentration sufficient for vitrification; 40 to 60% of said cryoprotectant concentration sufficient for vitrification; and 65 to 85% of said cryoprotectant concentration sufficient for vitrification.

19. The method of claim 1 or 3, wherein said cryoprotectant concentration sufficient for vitrification is between 6 and 9.5M.

20. The method of claim 2 or 3, wherein the tissue or organ is warmed at an average rate of from 200 to 300°C per minute to a temperature above -35°C.

21. The method of claim 2 or 3, wherein each solution of said series of solutions in step (c) has a temperature above -15°C.

22. The method of claim 2 or 3, wherein, in each immersion of step (c), said tissue or organ is also perfused with said solution.

23. The method of claim 2 or 3, wherein the tissue or organ is immersed in each solution of said series of solutions in step (c) for a sufficient time to achieve approximate osmotic equilibration.

24. The method of claim 2 or 3, wherein the tissue or organ is immersed in step (c) in a series of six solutions having decreasing concentrations of cryoprotectant, wherein the sixth solution is cryoprotectant-free.

25. The method of claim 24, wherein the tissue or organ is immersed in each solution of said series of six solutions for sufficient time to achieve approximate osmotic equilibration.

26. The method of claim 2 or 24, wherein the tissue or organ is immersed in each solution of said series of solutions for at least 10 minutes.

27. The method of claim 24, wherein the cryoprotectant concentration of said six solutions are: 40 to 60% of said concentration sufficient for vitrification; 30 to 45% of said concentration sufficient for vitrification; 15 to 35% of said concentration sufficient for vitrification; 5 to 20% of said concentration sufficient for vitrification; 2.5 to 10% of said concentration sufficient for vitrification; and 0% of said concentration sufficient for vitrification.

28. The method of claim 27, wherein each of said six solutions comprises an osmotic buffering agent.

29. The method of claim 28, wherein said osmotic buffering agent is a low molecular weight osmotic buffering agent.

30. The method of claim 29, wherein said osmotic buffering agent is mannitol.

31. The method of claim 28, further comprising immersing said tissue or organ in a second cryoprotectant-free vehicle solution, which does not contain an osmotic buffering agent, after said immersion in said cyroprotectant-free solution, which does comprise said osmotic buffering agent.

32. The method of claim 2 or 3, wherein at least 50% of a measured function of the tissue or organ is maintained as compared to fresh tissues or organs.

33. The method of claim 1, 2 or 3, wherein said cryoprotectant solution comprises at least one natural or synthetic ice blocker molecule.

34. The method of claim 1, 2 or 3, wherein said cryoprotectant solution comprises at least one member selected from the group consisting of acetamide, agarose, alginate, alanine, albumin, ammonium acetate, anti-freeze proteins, butanediol, chondroitin sulfate, chloroform, choline, cyclohexanediols, dextrans, diethylene glycol, dimethyl acetamide, dimethyl formamide, dimethyl sulfoxide, erythritol, ethanol, ethylene glycol, ethylene glycol monomethyl ether, formamide, glucose, glycerol, glycerophosphate, glyceryl monoacetate, glycine, glycoproteins, hydroxyethyl, starch, inositol, lactose, magnesium chloride, magnesium, sulfate, maltose, mannitol, mannose, methanol, methoxy propanediol, methyl acetamide, methyl formamide, methyl ureas, methyl glucose, methyl glycerol, phenol, pluronic polyols, polyethylene glycol, polyvinylpyrrolidone, proline, 1,2-propanediol, pyridine N-oxide, raffinose, ribose, serine, sodium bromide, sodium chloride, sodium iodide, sodium nitrate, sodium nitrite, sodium sulfate, sorbitol, sucrose, trehalose, triethylene glycol, trimethylamine acetate, urea, valine and xylose.

35. The method of claim 1, 2 or 3 wherein said cryoprotectant solution comprises dimethyl sulfoxide, formamide, and 1,2-propanediol.

36. The method of claim 13, wherein said cryoprotectant solution comprises 20-30% w/v dimethyl sulfoxide, 10-20% w/v formamide and 10-20% w/v 1,2-propanediol in a vehicle solution.

37. The method of claim 1, 2 or 3, wherein said tissue or organ is at least one tissue or organ, natural or engineered, vascularized or avascular, selected from the group consisting of musculoskeletal tissue, cartilage, menisci, muscles, ligaments, tendons, skin, cardiovascular tissue, heart valves, myocardium, periodontal tissue, glandular tissue, islets of Langerhans, cornea, ureter, urethra, pancreas, bladder, kidney, breast, liver, intestine and heart.

38. The method of claim 1, 2 or 3, wherein said tissue or organ is heart valve tissue.

39. The method of claim 1, 2 or 3, wherein said tissue or organ is cartilage.

40. The method of claim 1, 2 or 3, wherein said method is accomplished without perfusing said tissue or organ.

41. The method of claim 3, further comprising storing the vitrified tissue or organ after cooling and prior to warming.

## Patentansprüche

1. Verfahren zur Vitrifikation eines natürlichen oder eines künstlich hergestellten Gewebes oder Organs, das kein Blutgefäß ist, das Folgendes aufweist, nämlich
(i) Eintauchen des Gewebes oder des Organs, das kein Blutgefäß ist, in eine Reihe von Lösungen, die ansteigende Konzentrationen an Kälteschutzmittel aufweisen, um eine für die Vitrifikation ausreichende Kälteschutzmittelkonzentration zu erreichen, wobei jede Lösung der Reihe von Lösungen eine Temperatur über -15°C aufweist;
(ii) Abkühlen des Gewebes oder des Organs von einer Temperatur über -15°C auf eine Temperatur zwischen -80°C und der Glasübergangstemperatur in einer Lösung, die eine für die Vitrifikation ausreichende Konzentration an Kälteschutzmittel aufweist, mit einer durchschnittlichen Geschwindigkeit von 2,5 bis 100°C pro Minute und
(iii) weiteres Abkühlen des Gewebes oder des Organs von einer Temperatur, die zwischen -80°C und der Glasübergangstemperatur liegt, auf eine Temperatur unter der Glasübergangstemperatur mit einer durchschnittlichen Geschwindigkeit von weniger als 30°C pro Minute, um das Gewebe oder Organ zu vitrifizieren.

2. Verfahren zum Entnehmen eines Gewebes oder eines Organs, das kein Blutgefäß ist, aus dem Zustand der Vitrifikation in einer Lösung, die Kälteschutzmittel aufweist, das Folgendes aufweist, nämlich
(a) Erwärmen des vitrifizierten Gewebes oder des Organs, das kein Blutgefäß ist, in der Kälteschutzmittel enthaltenden Lösung auf eine Temperatur zwischen -80°C und der Glasübergangstemperatur mit einer durchschnittlichen Geschwindigkeit von 20 bis 40°C pro Minute;
(b) weiteres Erwärmen des Gewebes oder des Organs in der Lösung auf eine Temperatur über -75°C mit einer durchschnittlichen Geschwindigkeit von 200 bis 300°C pro Minute, wobei bei dieser Temperatur die Lösung ausreichend flüssig ist, so dass das Gewebe oder Organ daraus entnommen werden kann; und
(c) Eintauchen des Gewebes oder Organs in eine Reihe von Lösungen, die abnehmende Konzentrationen an Kälteschutzmittel aufweisen, um ein Gewebe oder ein Organ in einer kälteschutzmittelfreien Lösung zu erhalten.

3. Verfahren zur Vitrifikation eines Gewebes oder eines Organs, das kein Blutgefäß ist, und anschließend Entnehmen aus dem Zustand der Vitrifikation, das Folgendes aufweist, nämlich
(i) Eintauchen des Gewebes oder des Organs, das kein Blutgefäß ist, in eine Reihe von Lösungen, die ansteigende Konzentrationen an Kälteschutzmittel aufweisen, um eine für die Vitrifikation ausreichende Kälteschutzmittelkonzentration zu erreichen, wobei jede Lösung der Reihe von Lösungen eine Temperatur über -15°C aufweist,
(ii) Abkühlen des Gewebes oder des Organs von einer Temperatur über -15°C auf eine Temperatur zwischen -80°C und der Glasübergangstemperatur in einer Lösung, die eine für die Vitrifikation ausreichende Konzentration an Kälteschutzmittel aufweist mit einer durchschnittlichen Geschwindigkeit von 2,5 bis 100°C pro Minute;
(iii) weiteres Abkühlen des Gewebes oder des Organs von einer Temperatur, die zwischen -80°C und der Glasübergangstemperatur liegt, auf eine Temperatur unter der Glasübergangstemperatur mit einer durchschnittlichen Geschwindigkeit von weniger als 30°C pro Minute um das Gewebe oder Organ zu vitrifizieren;
(a) Erwärmen des vitrifizierten Gewebes oder Organs auf eine Temperatur zwischen -80°C und der Glasübergangstemperatur mit einer durchschnittlichen Geschwindigkeit von 20 bis 40°C pro Minute;
(b) weiteres Erwärmen des Gewebes oder Organs auf eine Temperatur über -75°C mit einer durchschnittlichen Geschwindigkeit von 200 bis 300°C pro Minute; und
(c) Eintauchen des Gewebes oder Organs in eine Reihe von Lösungen, die abnehmende Konzentrationen an Kälteschutzmittel aufweisen, um ein Gewebe oder Organ in einer kälteschutzmittelfreien Lösung zu erhalten.

4. Verfahren nach Anspruch 1 oder 3, wobei das Abkühlen des Gewebes oder des Organs von einer Temperatur über -15°C auf eine Temperatur zwischen -80°C und der Glasübergangstemperatur mit einer durchschnittlichen Geschwindigkeit von zumindest 10°C pro Minute durchgeführt wird.

5. Verfahren nach Anspruch 1 oder 3, wobei das Abkühlen des Gewebes oder des Organs von einer Temperatur über -15°C auf eine Temperatur zwischen -80°C und der Glasübergangstemperatur mit einer durchschnittlichen Geschwindigkeit von zumindest 15°C pro Minute durchgeführt wird.

6. Verfahren nach Anspruch 1 oder 3, wobei das Abkühlen des Gewebes oder des Organs von einer Temperatur über -15°C auf eine Temperatur zwischen -80°G und der Glasübergangstemperatur mit einer durchschnittlichen Geschwindigkeit von zumindest 20°C pro Minute durchgeführt wird.

7. Verfahren nach Anspruch 1 oder 3, wobei das Abkühlen des Gewebes oder des Organs von einer Temperatur über -15°C auf eine Temperatur zwischen -80°C und der Glasübergangstemperatur mit einer durchschnittlichen Geschwindigkeit von 10 bis 80°C pro Minute durchgeführt wird.

8. Verfahren nach Anspruch 1 oder 3, wobei das Abkühlen des Gewebes oder des Organs von einer Temperatur über -15°C auf eine Temperatur zwischen -80°C und der Glasübergangstemperatur mit einer durchschnittlichen Geschwindigkeit von 30 bis 60°C pro Minute durchgeführt wird.

9. Verfahren nach Anspruch 1 oder 3, wobei das Abkühlen des Gewebes oder des Organs von einer Temperatur, die zwischen -80°C und der Glasübergangstemperatur liegt, auf eine Temperatur unter der Glasübergangstemperatur mit einer durchschnittlichen Geschwindigkeit von weniger als 10°C pro Minute durchgeführt wird.

10. Verfahren nach Anspruch 1 oder 3, wobei das Abkühlen des Gewebes oder des Organs von einer Temperatur, die zwischen -80°C und der Glasübergangstemperatur liegt, auf eine Temperatur unter der Glasübergangstemperatur mit einer niedrigeren Geschwindigkeit durchgeführt wird als die Geschwindigkeit des Abkühlens des Gewebes oder des Organs von einer Temperatur über -15°C auf eine Temperatur zwischen -80°C und der Glasübergangstemperatur.

11. Verfahren nach Anspruch 1 oder 3, wobei das Abkühlen des Gewebes oder des Organs von einer Temperatur, die zwischen -80°C und der Glasübergangstemperatur liegt, auf eine Temperatur unter der Glasübergangstemperatur mit der gleichen Geschwindigkeit durchgeführt wird wie die Geschwindigkeit des Abkühlens des Gewebes oder des Organs von einer Temperatur über -15°C auf eine Temperatur zwischen -80°C und der Glasübergangstemperatur.

12. Verfahren nach Anspruch 1 oder 3, wobei der Schritt (i) des Eintauchens Folgendes aufweist, nämlich
Eintauchen des Gewebes oder des Organs in eine kälteschutzmittelfreie Lösung;
Eintauchen des Gewebes oder des Organs in zumindest eine Lösung, die Kälteschutzmittel in einer Konzentration aufweist, die geringer ist als die für die vitrifikation ausreichende Konzentration; und
Eintauchen des Gewebes oder des Organs in eine Lösung, die Kälteschutzmittel in der für die Vitrifikation ausreichenden Konzentration aufweist.

13. Verfahren nach Anspruch 12, wobei in jedem der Schritte des Schritts (i) des Eintauchens das Gewebe oder das Organ für eine ausreichende Zeit in die Lösung eingetaucht wird, um in etwa ein osmotisches Gleichgewicht zu erreichen.

14. Verfahren nach Anspruch 12, wobei in jedem der Schritte des Schritts (i) des Eintauchens das Gewebe oder das Organ für zumindest 10 Minuten in die Lösung eingetaucht wird.

15. Verfahren nach Anspruch 12, wobei der zweite Schritt des Schritts (i) des Eintauchens Folgendes aufweist, nämlich Eintauchen des Gewebes oder des Organs in eine Reihe von vier Lösungen, die ansteigende Konzentrationen an Kälteschutzmittel aufweisen, wobei jede von diesen eine Kälteschutzmittelkonzentration aufweist, die geringer ist als die für die Vitrifikation ausreichende Konzentration.

16. Verfahren nach Anspruch 15, wobei das Gewebe oder das Organ für eine ausreichende Zeit in jede Lösung der Reihe von vier Lösungen eingetaucht wird, um in etwa ein osmotisches Gleichgewicht zu erreichen.

17. Verfahren nach Anspruch 15, wobei das Gewebe oder das Organ für zumindest 10 Minuten in jede Lösung der Reihe von vier Lösungen eingetaucht wird.

18. Verfahren nach Anspruch 15, wobei die vier ansteigenden Konzentrationen wie folgt sind, nämlich 5 bis 20 % der für die Vitrifikation ausreichenden Kälteschutzmittelkonzentration; 15 bis 35 % der für die Vitrifikation ausreichenden Kälteschutzmittelkonzentration; 40 bis 60 % der für die Vitrifikation ausreichenden Kälteschutzmittelkonzentration; und 65 bis 85 % der für die Vitrifikation ausreichenden Kälteschutzmittelkonzentration.

19. Verfahren nach Anspruch 1 oder 3, wobei die für die vitrifikation ausreichende Kälteschutzmittelkonzentration zwischen 6 und 9,5 M liegt.

20. Verfahren nach Anspruch 2 oder 3, wobei das Gewebe oder das Organ mit einer durchschnittlichen Geschwindigkeit von 200 bis 300°C pro Minute auf eine Temperatur über -35°C erwärmt wird.

21. Verfahren nach Anspruch 2 oder 3, wobei jede Lösung der Reihe von Lösungen in Schritt (c) eine Temperatur von über - 15°C aufweist.

22. verfahren nach Anspruch 2 oder 3, wobei bei jedem Eintauchen in Schritt (c) das Gewebe oder das Organ auch mit der Lösung durchspült wird.

23. Verfahren nach Anspruch 2 oder 3, wobei das Gewebe oder das Organ in Schritt (c) für eine ausreichende Zeit in jede Lösung der Reihe von Lösungen eingetaucht wird, um in etwa ein osmotisches Gleichgewicht zu erreichen.

24. Verfahren nach Anspruch 2 oder 3, wobei das Gewebe oder das Organ in Schritt (c) in eine Reihe von sechs Lösungen eingetaucht wird, die abnehmende Konzentrationen an Kälteschutzmittel aufweisen, wobei die sechste Lösung kälteschutzmittelfrei ist.

25. Verfahren nach Anspruch 24, wobei das Gewebe oder das Organ für eine ausreichende Zeit in jede Lösung der Reihe von sechs Lösungen eingetaucht wird, um in etwa ein osmotisches Gleichgewicht zu erreichen.

26. Verfahren nach Anspruch 2 oder 24, wobei das Gewebe oder das Organ für zumindest 10 Minuten in jede Lösung der Reihe von Lösungen eingetaucht wird.

27. Verfahren nach Anspruch 24, wobei die Kälteschutzmittelkonzentrationen der sechs Lösungen wie folgt sind, nämlich 40 bis 60 % der für die Vitrifikation ausreichenden Konzentration; 30 bis 45 % der für die Vitrifikation ausreichenden Konzentration; 15 bis 35 % der für die Vitrifikation ausreichenden Konzentration; 5 bis 20 % der für die vitrifikation ausreichenden Konzentration; 2,5 bis 10 % der für die Vitrifikation ausreichenden Konzentration; und 0 % der für die Vitrifikation ausreichenden Konzentration.

28. Verfahren nach Anspruch 27, wobei jede der sechs Lösungen einen osmotischen Puffer aufweist.

29. Verfahren nach Anspruch 28, wobei der osmotische Puffer ein osmotischer Puffer mit niedrigem Molekulargewicht ist.

30. Verfahren nach Anspruch 29, wobei der osmotische Puffer Manitol ist.

31. Verfahren nach Anspruch 28, das weiterhin Folgendes aufweist, nämlich Eintauchen des Gewebes oder des Organs in eine zweite kälteschutzmittelfreie Lösung, die keinen osmotischen Puffer aufweist, und zwar nach dem Eintauchen in die kälteschutzmittelfreie Lösung, die einen osmotischen Puffer aufweist.

32. Verfahren nach Anspruch 2 oder 3, wobei im Vergleich mit frischen Geweben oder Organen zumindest 50 % einer gemessenen Funktion des Gewebes oder des Organs beibehalten werden.

33. Verfahren nach Anspruch 1, 2 oder 3, wobei die Kälteschutzmittellösung zumindest ein natürliches oder ein synthetisches Eisblockermolekül aufweist.

34. Verfahren nach Anspruch 1, 2 oder 3, wobei die Kälteschutzmittellösung zumindest ein Mitglied aufweist ausgewählt aus der Gruppe bestehend aus Acetamid, Agarose, Alginat, Alanin, Albumin, Ammoniumacetat, Frostschutzproteinen, Butandiol, Chondroitinsulfat, Chloroform, Cholin, Cyclohexandiolen, Dextranen, Diethylenglycol, Dimethylacetamid, Dimethylformamid, Dimethylsulfoxid, Erythritol, Ethanol, Ethylenglycol, Ethylenglycolmonomethylether, Formamid, Glucose, Glycerin, Glycerinphosphat, Glycerinmonoacetat, Glycin, Glycoproteinen, Hydroxyethylstärke, Inositol, Lactose, Magnesiumchlorid, Magnesiumsulfat, Maltose, Manitol, Mannose, Methanol, Methoxypropandiol, Methylacetamid, Methylformamid, Methylharnstoffen, Methylglucose, Methylglycerin, Phenol, pluronischen Polyolen, Polyethylenglycol, Polyvinylpyrrolidon, Prolin, 1,2-Propandiol, Pyridin-N-oxid, Raffinose, Ribose, Serin, Natriumbromid, Natriumchlorid, Natriumjodid, Natriumnitrat, Natriumnitrit, Natriumsulfat, Sorbit, Saccharose, Trehalose, Triethylenglycol, Trimethylaminacetat, Harnstoff, Valin und Xylose.

35. Verfahren nach Anspruch 1, 2 oder 3, wobei die Kälteschutzmittellösung Dimethylsulfoxid, Formamid und 1,2-Propandiol aufweist.

36. Verfahren nach Anspruch 13, wobei die Kälteschutzmittellösung 20 bis 30 % w/v Dimethylsulfoxid, 10 bis 20 % w/v Formamid und 10 bis 20 % w/v 1,2-Propandiol in einer Trägerlösung aufweist.

37. Verfahren nach Anspruch 1, 2 oder 3, wobei das Gewebe oder das Organ zumindest ein natürliches oder künstlich hergestelltes, vaskularisiertes oder avaskuläres Gewebe oder Organ ist, ausgewählt aus der Gruppe bestehend aus Muskel- und Knochenskelettgewebe, Knorpelgewebe, Meniskii, Muskeln, Bändern, Sehnen, Haut, cardiovaskulärem Gewebe, Herzklappen, Myocardium, Peridontalgewebe, Drüsengewebe, Langerhans'schen Inseln, Hornhaut, Harnleiter, Harnröhre, Pancreas, Blase, Niere, Brust, Leber, Darm und Herz.

38. Verfahren nach einem der Ansprüche 1, 2 oder 3, wobei das Gewebe oder das Organ Herzklappengewebe ist.

39. Verfahren nach einem der Ansprüche 1, 2 oder 3, wobei das Gewebe oder das Organ Knorpelgewebe ist.

40. Verfahren nach einem der Ansprüche 1, 2 oder 3, wobei das Verfahren ohne Durchspülen des Gewebes oder des Organs durchgeführt wird.

41. Verfahren nach Anspruch 3, das nach dem Abkühlen und vor dem Erwärmen weiterhin das Aufbewahren des vitrifizierten Gewebes oder des Organs aufweist.

## Revendications

1. Procédé de vitrification d'un tissu ou organe naturel ou reconstruit, autre qu'un vaisseau sanguin, comprenant :
(i) l'immersion du tissu ou de l'organe autre qu'un vaisseau sanguin, dans une série de solutions à des concentrations croissantes d'un cryoprotecteur pour obtenir une concentration en cryoprotecteur suffisante pour assurer une vitrification, chaque solution de ladite série de solutions étant à une température supérieure à -15°C. ;
(ii) le refroidissement du tissu ou de l'organe dans une solution dont la concentration en cryoprotecteur est suffisante pour la vitrification à une vitesse moyenne de 2,5 à 100°C par minute, à partir d'une température supérieure à -15°C, pour atteindre une température située entre -80°C et la température de transition vitreuse ; et
(iii) un autre refroidissement du tissu ou de l'organe à une vitesse moyenne inférieure à 30°C par minute, à partir d'une température située entre -80°C et la température de transition vitreuse, pour atteindre une température inférieure à la température de transition vitreuse pour vitrifier le tissu ou l'organe.

2. Procédé de dévitrification d'un tissu ou un organe autre qu'un vaisseau sanguin, dans une solution contenant un cryoprotecteur, comprenant :
(a) le réchauffement du tissu ou de l'organe vitrifié autre qu'un vaisseau sanguin dans ladite solution contenant un cryoprotecteur à une vitesse moyenne de 20 à 40°C par minute, pour atteindre une température située entre -80°C et la température de transition vitreuse ;
(b) un autre réchauffement du tissu ou de l'organe dans ladite solution, à une vitesse moyenne de 200 à 300°C par minute, pour atteindre une température supérieure à -75°C, dans lequel, à ladite température, la solution est suffisamment fluide pour que le tissu ou l'organe puisse en être retiré ; et
(c) l'immersion du tissu ou organe dans une série de solutions à des concentrations décroissantes en cryoprotecteur, pour obtenir un tissu ou un organe dans une solution sans cryoprotecteur.

3. Procédé de vitrification d'un tissu ou d'un organe autre qu'un vaisseau sanguin, suivi d'une dévitrification, comprenant :
(i) l'immersion du tissu ou organe autre qu'un vaisseau sanguin dans une série de solutions à des concentrations croissantes en cryoprotecteur, pour obtenir une concentration de cryoprotecteur suffisante pour la vitrification, chaque solution de ladite série de solutions étant à une température supérieure à -15°C ;
(ii) le refroidissement du tissu ou de l'organe dans une solution dont ladite concentration en cryoprotecteur est suffisante pour la vitrification à une vitesse moyenne de 2,5 à 100°C par minute, à partir d'une température supérieure à -15°C, pour atteindre une température située entre -80°C et la température de transition vitreuse ;
(iii) un autre refroidissement du tissu ou de l'organe à une vitesse moyenne inférieure à 30°C, par minute à partir d'une température située entre -80°C et la température de transition vitreuse, pour atteindre une température inférieure à la température de transition vitreuse pour vitrifier le tissu ou l'organe
(a) le réchauffement du tissu ou de l'organe vitrifié à une vitesse moyenne de 20 à 40°C, par minute pour atteindre une température située entre -80°C et la température de transition vitreuse ;
(b) un autre réchauffement du tissu ou de l'organe dans ladite solution à une vitesse moyenne de 200 à 300° C par minute, pour atteindre une température supérieure à - 75°C ; et
(c) l'immersion du tissu ou de l'organe dans une série de solutions à des concentrations décroissantes en cryoprotecteur, pour obtenir un tissu ou un organe dans une solution sans cryoprotecteur.

4. Procédé selon la revendication 1 ou 3, dans lequel le refroidissement du tissu ou de l'organe à partir d'une température supérieure à -15°C pour atteindre une température située entre -80°C et la température de transition vitreuse, est réalisé à une vitesse moyenne d'au moins 10°C par minute.

5. Procédé selon la revendication 1 ou 3, dans lequel le refroidissement du tissu ou de l'organe à partir d'une température supérieure à -15°C, pour atteindre une température située entre -80°C et la température de transition vitreuse, est réalisé à une vitesse moyenne d'au moins 15°C par minute.

6. Procédé selon la revendication 1 ou 3, dans lequel le refroidissement du tissu ou de l'organe à partir d'une température supérieure à - 15°C, pour atteindre une température située entre - 80°C et la température de transition vitreuse, est réalisé à une vitesse moyenne d'au moins 20°C par minute.

7. Procédé selon la revendication 1 ou 3, dans lequel le refroidissement du tissu ou de l'organe à partir d'une température supérieure à -15°C, pour atteindre une température située entre -80°C et la température de transition vitreuse, est réalisé à une vitesse moyenne de 10 à 80°C par minute.

8. Procédé selon la revendication 1 ou 3, dans lequel le refroidissement du tissu ou de l'organe à partir d'une température supérieure à -15°C, pour atteindre une température située entre -80°C et la température de transition vitreuse, est réalisé à une vitesse moyenne de 30 à 60°C par minute.

9. Procédé selon la revendication 1 ou 3, dans lequel le refroidissement du tissu ou de l'organe, à partir d'une température située entre -80°C et la température de transition vitreuse pour atteindre une température inférieure à la température de transition vitreuse est réalisé à une vitesse moyenne inférieure à 10°C par minute.

10. Procédé selon la revendication 1 ou 3, dans lequel le refroidissement du tissu ou de l'organe, à partir d'une température située entre -80°C et la température de transition vitreuse, pour atteindre une température inférieure à la température de transition vitreuse, est réalisé à une vitesse plus lente que la vitesse de refroidissement du tissu ou de l'organe, à partir d'une température supérieure à -15°C, pour atteindre une température située entre -80°C et la température de transition vitreuse.

11. Procédé selon la revendication 1 ou 3, dans lequel le refroidissement du tissu ou de l'organe, à partir d'une température située entre -80°C et la température de transition vitreuse, pour atteindre une température inférieure à la température de transition vitreuse, est réalisé à la même vitesse que celle pour refroidir le tissu ou l'organe à partir d'une température supérieure à -15°C, pour atteindre une température située entre -80°C et la température de transition vitreuse.

12. Procédé selon la revendication 1 ou 3, dans lequel l'étape d'immersion (i) comprend :
l'immersion du tissu ou de l'organe dans une solution sans cryoprotecteur ;
l'immersion du tissu ou de l'organe dans au moins une solution contenant un cryoprotecteur à une concentration inférieure à ladite concentration suffisante pour la vitrification ; et
l'immersion du tissu ou de l'organe dans une solution contenant un cryoprotecteur à ladite concentration suffisante pour la vitrification.

13. Procédé selon la revendication 12, dans lequel à chacune des étapes de l'étape (i) d'immersion, le tissu ou l'organe est immergé dans la solution pendant un temps suffisamment long pour atteindre approximativement l'équilibre osmotique.

14. Procédé selon la revendication 12, dans lequel à chacune des étapes de l'étape (i) d'immersion, le tissu ou l'organe est immergé dans la solution pendant au moins 10 minutes.

15. Procédé selon la revendication 12, dans lequel la deuxième étape de l'étape d'immersion (i) comprend l'immersion du tissu ou de l'organe dans une série de quatre solutions à des concentrations croissantes en cryoprotecteur, chacune d'entre elles ayant une concentration en cryoprotecteur inférieure à ladite concentration suffisante pour la vitrification.

16. Procédé selon la revendication 15, dans lequel le tissu ou l'organe est immergé dans chaque solution de ladite série de quatre solutions, pendant un temps suffisamment long pour atteindre approximativement l'équilibre osmotique.

17. Procédé selon la revendication 15, dans lequel le tissu ou l'organe est immergé dans chaque solution de ladite série de quatre solutions pendant au moins 10 minutes.

18. Procédé selon la revendication 15, dans lequel lesdites quatre concentrations croissantes s'élèvent à 5 à 20 % de ladite concentration de cryoprotecteur suffisante pour la vitrification ; 15 à 35% de ladite concentration en cryoprotecteur suffisante pour la vitrification ; 40 à 60% de ladite concentration de cryoprotecteur suffisante pour la vitrification ; et 65 à 85% de ladite concentration en cryoprotecteur suffisante pour la vitrification.

19. Procédé selon la revendication 1 ou 3, dans lequel ladite concentration de cryoprotecteur suffisante pour la vitrification se situe entre 6 et 9,5 M.

20. Procédé selon la revendication 2 ou 3, dans lequel le tissu ou l'organe est réchauffé à une vitesse moyenne de 20 à 300° C par minute, pour atteindre une température supérieure à - 35° C.

21. Procédé selon la revendication 2 ou 3, dans lequel chaque solution de ladite série de solutions de l'étape (c) est à une température supérieure à -15°C.

22. Procédé selon la revendication 2 ou 3, dans lequel, à chaque immersion de l'étape (c), ledit tissu ou organe est également perfusé avec ladite solution.

23. Procédé selon la revendication 2 ou 3, dans lequel le tissu ou l'organe est immergé dans chaque solution de ladite série de solutions de l'étape (c), pendant un temps suffisamment long pour atteindre approximativement l'équilibre osmotique.

24. Procédé selon la revendication 2 ou 3, dans lequel le tissu ou l'organe est immergé pedant l'étape (c) dans une série de six solutions à des concentrations décroissantes en cryoprotecteur, dans lequel la sixième solution ne contient pas de cryoprotecteur.

25. Procédé selon la revendication 24, dans lequel le tissu ou l'organe est immergé dans chaque solution de ladite série de six solutions, pendant un temps suffisamment long pour atteindre approximativement l'équilibre osmotique.

26. Procédé selon la revendication 2 ou 24, dans lequel le tissu ou l'organe est immergé dans chaque solution de ladite série de solutions pendant au moins 10 minutes.

27. Procédé selon la revendication 24, dans lequel la concentration en cryoprotecteur dans lesdites six solutions est la suivante : 40 à 60 % de ladite concentration suffisante pour la vitrification ; 30 à 45 % de ladite concentration suffisante pour la vitrification ; 15 à 35% de ladite concentration suffisante pour la vitrification ; 5 à 20 % de ladite concentration suffisante pour la vitrification ; 2,5 à 10 % de ladite concentration suffisante pour la vitrification ; et 0% de ladite concentration suffisante pour la vitrification.

28. Procédé selon la revendication 27, dans lequel chacune desdites six solutions comprend un tampon osmotique.

29. Procédé selon la revendication 28, dans lequel ledit tampon osmotique est un tampon osmotique de faible poids moléculaire.

30. Procédé selon la revendication 29, dans lequel ledit tampon osmotique est du mannitol.

31. Procédé selon la revendication 28, comprenant en outre l'immersion dudit tissu ou organe dans une deuxième solution formant véhicule sans cryoprotecteur, qui ne contient pas de tampon osmotique, après ladite immersion dans ladite solution sans cryoprotecteur, qui comprend ledit tampon osmotique.

32. Procédé selon la revendication 2 ou 3, dans lequel au moins 50 % d'une fonction mesurée du tissu ou de l'organe est conservée par rapport aux tissus ou organes frais.

33. Procédé selon la revendication 1, 2 ou 3, dans lequel ladite solution cryoprotectrice comprend au moins une molécule naturelle ou artificielle empêchant la formation de glace.

34. Procédé selon la revendication 1, 2 ou 3 dans lequel ladite solution cryoprotectrice comprend au moins un élément sélectionné dans le groupe comprenant l'acétamide, l'agarose, l'alginate, l'alanine, l'albumine, l'acétate d'ammonium, des protéines antigel, le butanediol, le sulfate de chondroïtine, le chloroforme, la choline, les cyclohexanediols, les dextranes, le diéthylène-glycol, le dimethylacétamide, le diméthylformamide, le sulfoxyde de diméthyle, l'érithrite, l'éthanol, l'éthylène-glycol, le monométhyléther d'éthylèneglycol, le formamide, le glucose, le glycérol, le glycérophosphate, la monoacétine, la glycine, les glycoprotéines, l'amidon hydroxyéthyle, l'inositol, le lactose, le chlorure de magnésium, le magnésium, le sulfate, le maltose, le mannitol, le mannose, le méthanol, le méthoxy propanediol, le méthylacétamide, le méthylformamide, les méthyl-urées, le méthylglucose, le méthylglycérol, le phénol, les polyols pluroniques, le polyéthylène glycol, le polyvinylpyrrolidone, le proline, le 1,2-propanediol, la pyridine N-oxyde, le raffinose, le ribose, la sérine, le bromure de sodium, le chlorure de sodium, l'iodure de sodium, le nitrate de sodium, le nitrite de sodium, le sulfate de sodium, le sorbitol, la saccharose, le tréhalose, le triéthylèneglycol, le triméthylamine acétate, l'urée, la valine et le xylose.

35. Procédé selon la revendication 1, 2 ou 3, dans lequel la solution cryoprotectrice comprend du sulfoxyde de diméthyle, du formamide et du 1,2-propanediol.

36. Procédé selon la revendication 13, dans lequel ladite solution cryoprotectrice comprend 20 à 30 % p/v de sulfoxyde de diméthyle, 10 à 20 % p/v de formamide et 10 à 20 % p/v de 1,2-propanediol dans une solution formant véhicule.

37. Procédé selon la revendication 1, 2 ou 3, dans lequel ledit tissu ou organe est au moins un tissu ou organe, naturel ou reconstruit, vascularisé ou avasculaire, sélectionné dans un groupe constitué de tissu musculo-squelettique, cartilage, ménisques, muscles, ligaments, tendons, peau, tissu cardiovasculaire, valvules cardiaques, myocarde, tissu périodontal, tissu glandulaire, îlots pancréatiques, cornée, uretère, urètre, pancréas, vessie, rein, sein, foie, intestin et coeur.

38. Procédé selon la revendication 1, 2 ou 3, dans lequel ledit tissu ou organe est un tissu de valvule cardiaque.

39. Procédé selon la revendication 1, 2 ou 3, dans lequel ledit tissu ou organe est un cartilage.

40. Procédé selon la revendication 1, 2 ou 3, dans lequel ledit procédé est mis en oeuvre sans perfuser ledit tissu ou organe.

41. Procédé selon la revendication 3, comprenant en outre la conservation du tissu ou organe vitrifié après refroidissement et avant réchauffement.
